# EUROPEAN PATENT SPECIFICATION

(11) **EP 2 067 650 B1**
(45) Date of publication and mention of the grant of the patent: **28.04.2021**
(21) Application number: 08105924.8
(22) Date of filing: 03.12.2008
(51) Int. Cl.: B60M 1/02, B61L 23/06

(54) **Short circuit device**
Kurzschlussvorrichtung
Dispositif de court-circuit

(30) Priority: 04.12.2007 NL 1034790
(43) Date of publication of application: 10.06.2009
(73) Proprietor: VolkerWessels Intellectuele Eigendom B.V., 3826 PA Amersfoort (NL)
(72) Inventor: Bronsvoort, Erik, 4131 NJ, Vianen (NL)
(74) Representative: Nederlandsch Octrooibureau

(56) References cited:
- EP-A- 1 125 787
- EP-A- 1 323 612
- DE-U- 7 514 704
- NL-C1- 1 008 790
- US-A- 5 021 008
- US-A1- 2003 036 294

## Description

The invention relates to providing a temporary galvanic connection between galvanic leads, particularly in the field of (electrical) trains and such vehicles, such as between rails. For train application it specifically concerns simulation of the presence of a train in a secured track section. If work is carried out near a track section, it is typical to provide a short circuit bridge between both rails, such that a train is simulated, such that the track relay disconnects.

Technical background for rail application is e.g. offered by NL1000713 (Railbedrijven BV) and EP0847339 (Railpro BV). EP 1 323 612 A provides the closest prior art on which the preamble of the attached claim 1 is based.

Aspects that are important, is making sure that the short circuit bridge functions properly, such that it is sure that the track relay or such element taking the track out of service functions properly. This preferably without the requirement to observe the position of the signalling post along the track. Further it is important to be sure that after the short circuit bridge is positioned and the track section is safe for work, this safety is not lost accidentally, e.g. because the resistance of the bridge increases by which the track relay activates again.

Embodiments wherein the short circuit bridge or such device is provided with a rod or such rigid element which extends over substantially the complete distance between the rails of the track, do not belong to the invention. In stead use is made of a preferably along substantially its complete length flexible elongate element, such as rope or cable, with at both ends a member for temporary connection to a rail, e.g. the foot of it. Preferably the short circuit bridge comprises exactly one such flexible element. The flexible element preferably has two or more, more preferably at least four, galvanic leads which are preferably electrically isolated mutually. Preferably along the length of the flexible element, more preferably midway its length, there is a housing to contain e.g. one or more of a detection, signalling, warning, displaying, registration system. The connection between flexible element, connection member and/or housing is preferably pull tight. E.g. a lamp or loudspeaker is provided at the housing to provide a signal to people nearby. Also the housing can be provided with a transmitter to e.g. wireless transfer a radio signal to a receiver at an operator.

A part of the elongated, flexible element could be completely or partly be replaced by an elongated rigid element, which can possibly pivot at one or more locations along its length, e.g. a rod which is e.g. hollow and through which a galvanic lead runs, or said rod itself provides a galvanic lead.

Preferably two galvanic leads are connected to a connection of a rail connection assembly, e.g. a connector clip. Preferably said assembly is provided such that the ends of both leads are mutually isolated when the assembly is not connected to the rail while the ends of both leads are through the rail electrically connected when the assembly is connected to a rail. Both leads can e.g. be electrically connected with one of both jaws of a pair of pincers which is clamped onto the rail for electrical connection, wherein the pincer is provided such that the locations coming in contact with the rail, e.g. a tooth directed towards the opposite jaw, at the one and other jaw are mutually isolated and in the inactive situation of the pincer, when it is not clamped onto the rail, have no mutual electrical contact, such that they are only electrically connected, when between them an electrically conducting item, such as a rail, is clamped. Then there is an electrical circuit from the one leads to the one contact point and then through the between the contact points clamped part of the rail to the other contact point and then to the other lead.

The one contact point preferably engages the one, e.g. upper side and the other contact point the other, e.g. lower side, of the rail.

It is proposed with the invention, as reflected in the claims, to make use of a clamping device that belongs to the short circuit bridge for temporary connection to a rail, e.g. its foot. This clamping device is based on a pincer, scissors or clipping element, thus comprising two elongated, rigid and preferably substantially identical legs which both have a clamping jaw and a gripping part and there between a pivot where both legs are pivotably connected mutually, such that by pivoting around the pivot the jaws move towards each other while at the same time the gripping parts move away from each other (such as with a laundry clip) or towards each other (such as with a scissors or pincer) . Preferably clamping jaw and gripping part of the one leg are in mutual extension and/or at the same side of the pivot (such as with a laundry clip), such that when the gripping parts move towards each other, the clamping jaws pivot away from each other. Preferably the clamping device has a resilient device that biases the jaws towards each other. Jaws and grips are preferably made of metal, such as steel.

The jaw can be e.g. based on a so called welding clamp which during electrical welding is clamped to the item to have an electrical connection with it.

Each jaw preferably has a to the other jaw directed contact point with preferably sharp contact surface. The contact point is preferably galvanically isolated from the clamping device and/or the other contact point. Preferably one or more galvanic leads are connected to the contact point, e.g. the leads which extend through the flexible element.

The clamping device preferably has a spacing or stop element to limit the distance over which the jaws can be moved to each other, preferably to make sure that the jaws and/or contact points can not be pivoted such that they make mutual contact. The stop element is preferably a spacer which is preferably galvanic isolating.

The clamping device preferably has a spacing or stop element to limit the distance that an item that is to be clamped with the device, such as the foot of a rail, can project between the jaws, e.g. to avoid that the item makes unintended contact with a part of the clamping device.

The clamping device preferably has a bearing element to bear against the rail when the device is clamped to it with its jaws while in the operating condition. The bearing element is preferably galvanically isolated. The bearing element is preferably provided at a jaw and is preferably directed to the opposite clamping jaw. The bearing element is preferably provided at the side of the contact point which is directed away from the side that faces the pivot.

The clamping device preferably has a locking device and/or switchable biassing device for locking of the position and/or to selectively bias the jaws in a predetermined pivoting direction. Preferably these two devices are integrated. Preferably one or both these devices are provided at a gripping part, preferably at the (free) end remote from the pivot. One or both these devices are preferably mounted such that they can pivot. The switchable biassing device is preferably designed to increase the biassing force with which the contact points are pressed onto the rail foot. If this device is switched off, one can open the jaws easily by hand. The position locking is designed to make sure that if the clamping device is positioned according to the rules, it can not be removed by an unauthorised person. For that preferably use is made of a lock device, the key of which e.g. is at the supervisor.

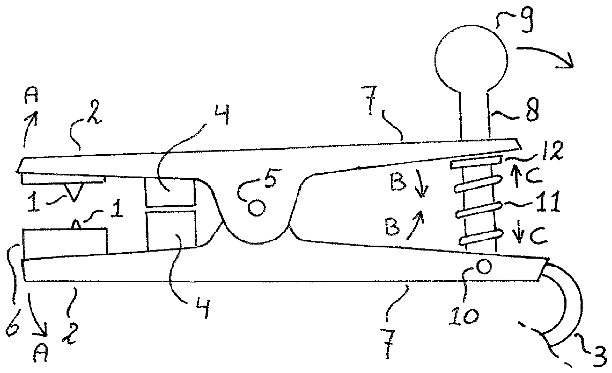

The invention can be embodied in different manners and all are within the patent protection. Now a presently preferred embodiment is illustrated by way of the drawing. The drawing shows a clamp of the invention in side view.

The clamp belongs to a short circuit bridge made from a housing for electronics from which at both sides a flexible cable projects with at the both free ends a clamp. The cable contains two or four mutually isolated metal wires, that are connected to the electronics within the housing and to the clamps. The cables are about equal in length and sufficient long such that each clamp can be clamped onto the foot of the rail of a track.

The clamp is based on a clamp as disclosed in Swiss patent CH394333, published 30 November 1965. The clamp disclosed in it is designed to ground welding equipment.

This clamp is modified as follows:
At each jaw 2 there is at the side facing the other jaw a contact part 1 of hard metal with to the other jaw directed sharp contact surface. Each part 1 is galvanically isolated from the clamp and to each part 1 is a respectively are two relevant metal wires from the cable 3 connected. Thus the parts 1 of a clamp are galvanically isolated from each other connected to the electronics within the housing.

Between the jaws a spacer or stop element 4 of galvanically isolating material is mounted to prevent that the jaws 2 by the (continuous operating) biassing spring (e.g. an around rod 8 rolled coil spring of which the one end bears against the one and the other end bears against the other gripping part 7 with bias) move so far to each other, that the contact parts 1 touch each other. This spacer is present between the contact parts and the pivot 5 of the clamp. This element 4 avoids also that the rail foot is inserted too far between the jaws and makes contact with metal parts of the clamp, e.g. from the root of the jaws to the pivot 5 extending material.

One of the jaws has at the free end a bearing element 6. The part 1 and said jaw 2 is present between said element 6 and the pivot 5. The element 6 bears against the lower side of the rail foot to stabilise the clamp.

At the free end of one of the parts 7 there is a rod 8 with operating button 9 mounted pivoting around pin 10. The rod projects through a coil like compression spring 11. The free end of the other gripping part 7 has a to its from the jaw 2 away directed end open slit in and out of which the rod 8 can be pivoted.

Starting from the situation shown in which the rod 8 is pivoted to the right compared to the illustrated situation until out of engagement with the slit, one operates as follows: If the jaws of the clamp are clamped on the foot of the rail, the rod 8 is pivoted to the left into the slit, wherein the compression spring 11 pivots with a shoulder 12 below the gripping part and thus additionally biases the clamping jaws towards each other, such that a the jaws 2 towards each other biasing force is provided, which only hardly or even not can be met by a to the gripping parts 7 given hand force. The stroke over which the compression spring 11 can be depressed is limited by a stop (not shown) at the rod, such that with typically within the slit positioned rod 8, the parts 7 can hardly be moved to each other such that the clamp can not be openend unintentionally.

With the locking device (not shown) one can avoid that the rod 8 is removed from its illustrated active position unintentionally. E.g. the locking device has a lock operated by a key.

By pivoting the parts 7 in the direction of the arrows B towards each other around pin 5, the jaws 2 pivot away from each other around pin 5. The spring 11 offers a force acting in the direction of the arrows C, against pivoting according to the arrows B.

Thus, preferably one or more of the following applies: to electrically bridge two rails of a track, two mutually galvanic isolated leads are provided, which at their free ends are electrically connected to the jaws of a first pincer and second pincer, respectively, which each are clamped onto one of both rails of the track. These pincers are designed such that in unloaded condition the parts of the jaws that are designed to make electrically conducting contact with the rail during typical use, are electrically isolated from each other and an electrical connection between said part of the one jaw and the corresponding part of the other jaw of the same pincer is only provided, when there between a rail or other electrically conducting item is clamped. Preferably the end of the one lead is, e.g., combined with the one jaw and the corresponding end of the other lead is combined with the corresponding end of the other lead of the same pincer, such that said ends are only electrically conducting connected to each other, when a rail or other electrically conducting item is typically clamped between the jaws of the relative pincer. The pincers are provided with a feature to increase the clamping and/or contact force, to avoid unintentional opening and/or loosing of contact and/or unauthorised opening and/or loosing of contact, which three features are preferably integrated in a sub assembly.

## Claims

1. Short circuit device, comprising a flexible elongated element with at both sides a clamp as a connection member, for temporary mounting to a rail and at a location along the length of the flexible element and at a distance from the clamps a housing having one or more of a detection, signalling, warning, display or registration system, wherein the clamp is provided with two contact points (1) which contact points are galvanically isolated from the clamp and/or the other contact point and a galvanic lead (3) is connected to the contact points **characterised in that** the clamp is a scissor like element of which each jaw (2) has a to the other jaw directed contact point (1) with sharp contact surface, and the clamp has a switchable biasing device (11) to selectively bias the jaws (2) in a predetermined pivoting direction (B) to increase the biasing force with which the contact points (1) are pressed onto the rail foot.

2. Device according to claim 1, wherein of the clamp the jaw (2) and the grip (7) of a leg are in mutual extension and/or at the same side of the pivot (5), such that when the grips (7) are pivoted towards each other, the jaws (2) are pivoted away from each other.

3. Device according to any of claims 1-2, wherein the clamp has a spacer (4) to limit the distance over which the jaws (2) can be moved towards each other or to limit the distance over which an item to be clamped with the device, such as the foot of a rail, can penetrate between the jaws.

4. Device according to any of claims 1-3, wherein the clamp has one or more of the following:
- a bearing element (6) to bear against the rail, when the clamp is in an operating position and is clamped to it with its jaws (2);
- a locking device (8, 9) to lock the position of the jaws (2) to make sure that a clamp that is mounted in the typical manner can not be removed by an unauthorised person.

5. Device according to any of claims 1-4, wherein the flexible element has a minimum of two, preferably a minimum of four galvanic leads which are electrically isolated from each other.

6. Device according to any of claims 1-5, wherein two galvanic leads are connected to a clamp.

7. Device according to any of claims 1-6, wherein the clamp is designed such that the ends of two leads are mutually isolated, when the clamp is not connected to the rail, while the ends of two conductors are electrically connected to each other through the rail, when the clamp is connected to a rail.

8. Clamp for a device according to any of claims 1-7, **characterised in that** the clamp is a scissor like element of which each jaw (2) has a to the other jaw directed contact point (2) with sharp contact surface, which contact point is galvanically isolated from the clamp and/or the other contact point and a galvanic lead (3) is connected to the contact point and the clamp has a switchable biasing device (11) to selectively bias the jaws (2) in a predetermined pivoting direction (B) to increase the biasing force with which the contact points (2) are pressed onto the rail foot and wherein the clamp has a locking device (8, 9) to lock the position of the jaws (2) to make sure that a clamp that is mounted in the typical manner can not be removed by an unauthorised person

## Patentansprüche

1. Kurzschlussvorrichtung, umfassend ein flexibles längliches Element mit einer Klemme an beiden Seiten als Verbindungselement, zum vorübergehenden Befestigen an einer Schiene und an einer Stelle entlang der Länge des flexiblen Elements, und in einem Abstand von den Klemmen ein Gehäuse mit einem oder mehreren von einem Detektions-, Signalisierungs-, Warn-, Anzeige- oder Registriersystem, wobei die Klemme mit zwei Kontaktpunkten (1) versehen ist, deren Kontaktpunkte galvanisch von der Klemme und/oder dem anderen Kontaktpunkt isoliert sind, und eine galvanische Leitung (3) mit den Kontaktpunkten verbunden ist,
**dadurch gekennzeichnet, dass** die Klemme ein scherenartiges Element ist, von dem jede Backe (2) einen zur anderen Backe gerichteten Kontaktpunkt (1) mit einer scharfen Kontaktfläche aufweist, und die Klemme eine umschaltbare Vorspannvorrichtung (11) aufweist, um die Backen (2) selektiv in einer vorbestimmten Schwenkrichtung (B) vorzuspannen, um eine Vorspannkraft, mit der die Kontaktpunkte (1) auf einen Schienenfuß gedrückt werden, zu erhöhen.

2. Vorrichtung nach Anspruch 1, wobei bei der Klemme die Backe (2) und der Griff (7) eines Schenkels in gegenseitiger Verlängerung und/oder auf der gleichen Seite des Drehpunktes (5) liegen, so dass beim Schwenken der Griffe (7) gegeneinander die Backen (2) voneinander weggeschwenkt werden.

3. Vorrichtung nach einem der Ansprüche 1 bis 2, wobei die Klemme einen Abstandshalter (4) aufweist, um einen Abstand zu begrenzen, über den die Backen (2) aufeinander zubewegt werden können, oder um einen Abstand zu begrenzen, über den ein mit der Vorrichtung zu klemmender Gegenstand, wie etwa ein Fuß der Schiene, zwischen die Backen eindringen kann.

4. Vorrichtung nach einem der Ansprüche 1 bis 3, wobei die Klemme eines oder mehrere der nachstehenden Merkmale aufweist:
- ein Lagerelement (6) zum Anlegen an der Schiene, wenn sich die Klemme in einer Betriebsposition befindet und mit ihren Backen (2) an dieser festgeklemmt ist;
- eine Verriegelungsvorrichtung (8, 9) zum Verriegeln einer Position der Backen (2), um sicherzustellen, dass die auf die typische Weise montierte Klemme nicht von einer unautorisierten Person entfernt werden kann.

5. Vorrichtung nach einem der Ansprüche 1 bis 4, wobei das flexible Element mindestens zwei, vorzugsweise mindestens vier galvanische Leitungen aufweist, die voneinander elektrisch getrennt sind.

6. Vorrichtung nach einem der Ansprüche 1 bis 5, wobei zwei galvanische Leitungen mit der Klemme verbunden sind.

7. Vorrichtung nach einem der Ansprüche 1 bis 6, wobei die Klemme so beschaffen ist, dass die Enden von zwei Leitungen voneinander isoliert sind, wenn die Klemme nicht mit der Schiene verbunden ist, während die Enden von zwei Leitern über die Schiene elektrisch miteinander verbunden sind, wenn die Klemme mit der Schiene verbunden ist.

8. Klemme für eine Vorrichtung nach einem der Ansprüche 1 bis 7, **dadurch gekennzeichnet, dass** die Klemme ein scherenartiges Element ist, bei dem jede Backe (2) eine zu der anderen Backe gerichtete Kontaktstelle (1) mit einer scharfen Kontaktfläche aufweist, dessen Kontaktstelle von der Klemme und/oder der anderen Kontaktstelle galvanisch isoliert ist, und eine galvanische Leitung (3) mit der Kontaktstelle verbunden ist, und die Klemme eine umschaltbare Vorspanneinrichtung (11) aufweist, um die Backen (2) selektiv in einer vorbestimmten Schwenkrichtung (B) vorzuspannen, um eine Vorspannkraft mit der die Kontaktstellen (1) auf einen Schienenfuß gedrückt werden zu erhöhen, und wobei die Klemme eine Verriegelungsvorrichtung (8, 9) aufweist, um eine Position der Backen (2) zu verriegeln, um sicherzustellen, dass die in der typischen Weise montierte Klemme nicht von einer unautorisierten Person entfernt werden kann.

## Revendications

1. Dispositif de court-circuit, comprenant un élément allongé flexible avec des deux côtés une pince comme élément de connexion, pour un montage temporaire sur un rail et au niveau d'un emplacement le long de la longueur de l'élément flexible et, à une distance des pinces, un boîtier ayant un ou plusieurs parmi des systèmes de détection, de signalisation, d'avertissement, d'affichage ou d'enregistrement, dans lequel la pince est pourvue de deux points de contact (1), chaque point de contact étant isolé galvaniquement de la pince et/ou de l'autre point de contact et un conducteur galvanique (3) est connecté aux points de contact,
**caractérisé en ce que** la pince est un élément en forme de ciseaux dont chaque mâchoire (2) a un point de contact (1) dirigé vers l'autre mâchoire avec une surface de contact aigue, et la pince a un dispositif de sollicitation commutable (11) pour solliciter sélectivement les mâchoires (2) dans une direction de pivotement prédéterminée (B) afin d'augmenter la force de sollicitation avec laquelle les points de contact (1) sont pressés sur le patin de rail.

2. Dispositif selon la revendication 1, dans lequel par rapport à la pince, la mâchoire (2) et la partie de préhension (7) d'une jambe sont en extension mutuelle et/ou du même côté du pivot (5), de sorte que lorsque les parties de préhension (7) pivotent l'une vers l'autre, les mâchoires (2) pivotent loin l'une de l'autre.

3. Dispositif selon l'une quelconque des revendications 1 à 2, dans lequel la pince a un élément d'espacement (4) pour limiter la distance sur laquelle les mâchoires (2) peuvent être déplacées l'une vers l'autre ou pour limiter la distance sur laquelle un article à serrer avec le dispositif, tel que le patin d'un rail, peut pénétrer entre les mâchoires.

4. Dispositif selon l'une quelconque des revendications 1 à 3, dans lequel la pince présente un ou plusieurs parmi :
- un élément d'appui (6) pour venir en appui contre le rail, lorsque la pince est dans une position de fonctionnement et y est serrée avec ses mâchoires (2) ;
- un dispositif de verrouillage (8, 9) pour verrouiller la position des mâchoires (2) afin de garantir qu'une pince montée de la manière standard ne puisse pas être retirée par une personne non autorisée.

5. Dispositif selon l'une quelconque des revendications 1 à 4, dans lequel l'élément flexible a un minimum de deux, de préférence un minimum de quatre conducteurs galvaniques qui sont isolés électriquement les uns des autres.

6. Dispositif selon l'une quelconque des revendications 1 à 5, dans lequel deux conducteurs galvaniques sont connectés à une pince.

7. Dispositif selon l'une quelconque des revendications 1 à 6, dans lequel la pince est conçue de telle sorte que les extrémités de deux conducteurs sont isolées mutuellement, lorsque la pince n'est pas connectée au rail, tandis que les extrémités de deux conducteurs sont connectées électriquement l'une à l'autre via le rail, lorsque la pince est connectée à un rail.

8. Pince pour un dispositif selon l'une quelconque des revendications 1 à 7, **caractérisée en ce que** la pince est un élément analogue à des ciseaux dont chaque mâchoire (2) a un point de contact (2) dirigé vers l'autre mâchoire avec une surface de contact aigue, lequel point de contact est isolé galvaniquement de la pince et/ou de l'autre point de contact et un conducteur galvanique (3) est connecté au point de contact et la pince a un dispositif de sollicitation commutable (11) pour solliciter sélectivement les mâchoires (2) dans une direction de pivotement prédéterminée (B) afin d'augmenter la force de sollicitation avec laquelle les points de contact (2) sont pressés sur le patin de rail et dans lequel la pince a un dispositif de verrouillage (8, 9) pour verrouiller la position des mâchoires (2) afin de garantir qu'une pince montée de la manière standard ne puisse pas être retirée par une personne non autorisée.
